# EUROPÄISCHE PATENTANMELDUNG

(11) **EP 2 336 590 A2**
(43) Veröffentlichungstag der Anmeldung: **22.06.2011**
(21) Anmeldenummer: 10194820.6
(22) Anmeldetag: 14.12.2010
(51) Int. Cl.: F16D 25/12, F16D 48/02, F04C 2/16

(54) **Pumpenaggregat für ein Doppelkupplungsgetriebe eines Kraftfahrzeugs**

(30) Priorität: 15.12.2009 DE 102009058363
(71) Anmelder: Leistritz Pumpen GmbH, 90459 Nürnberg (DE)
(72) Erfinder: Quast, Rolf, 90475 Nürnberg (DE); Hornivius, Stefan, 91126 Schwabach (DE)
(74) Vertreter: Simon, Josef

(57) **Zusammenfassung**

Pumpenaggregat für ein Doppelkupplungsgetriebe eines Kraftfahrzeugs, mit zwei Teilgetrieben mit jeweils einer Kupplung, um ein Teilgetriebe mit einem Antrieb zu verbinden, wobei das Pumpenaggregat eine Pumpe umfasst, die derart ausgebildet ist, dass sie in einem ersten Betriebszustand einen Kühlstrom (26) für die Kupplungen, in einem zweiten Betriebszustand einen Leistungsstrom (27) für Stellorgane des Doppelkupplungsgetriebes (7) und in einem dritten Betriebszustand sowohl den Kühlstrom (26) als auch den Leistungsstrom (27) erzeugt.

## Beschreibung

Die Erfindung betrifft ein Pumpenaggregat für ein Doppelkupplungsgetriebe eines Kraftfahrzeugs, mit zwei Teilgetrieben mit jeweils einer Kupplung, um ein Teilgetriebe mit einem Antrieb zu verbinden.

Doppelkupplungsgetriebe, die auch als Direktschaltgetriebe bezeichnet werden, kommen derzeit überwiegend bei Kraftfahrzeugen mit leistungsstarken Motoren zum Einsatz. Doppelkupplungsgetriebe sind automatische Getriebe, die aus zwei voneinander unabhängigen Teilgetrieben bestehen, die einen vollautomatischen Gangwechsel ermöglichen, ohne dass es dabei zu einer Unterbrechung der Zugkraft kommt. Während bei herkömmlichen Automatikgetrieben ein Drehmomentwandler für die Kraftübertragung vorgesehen ist, erfolgt die Kraftübertragung bei einem Doppelkupplungsgetriebe über eine der beiden Kupplungen, die den Antrieb mit den beiden Teilgetrieben verbinden. Beim Gangwechsel schließt eine Kupplung, während die andere praktisch gleichzeitig geöffnet wird, wodurch ein Gangwechsel ohne Unterbrechung der Zugkraft ermöglicht wird.

Ein Doppelkupplungsgetriebe besteht aus einem Doppelstrang, wobei ein Strang die geraden Gänge und der andere Strang die ungeraden Gänge trägt. Über die beiden Kupplungen wird jeweils einer der Stränge mit dem Antrieb verbunden. Beide Stränge bzw. Teilgetriebe arbeiten auf einem gemeinsamen Getriebeausgang. Eine elektronische Getriebesteuerung steuert die Schaltvorgänge entsprechend einem Schaltprogramm, insbesondere in Abhängigkeit der Motordrehzahl, der Geschwindigkeit und Bedienvorgängen des Fahrers wie eine Gaspedalbetätigung oder die Positionierung eines Wählhebels. Das Doppelkupplungsgetriebe besitzt eine integrierte Aktorik, die die beiden Teilgetriebe und die Kupplungen elektromechanisch oder hydraulisch betätigt.

Während des Fahrbetriebs wird durch eines der Teilgetriebe die Last von dem Motor zum Getriebeausgang übertragen. Vor dem Schalten wird im lastfreien Teilgetriebe der neue zu schaltende Gang eingelegt und vorgewählt. Anschließend wird die Kupplung des vorgewählten Gangs geschlossen und die Kupplung des bisher belasteten Gangs geöffnet. Auf diese Weise kann ohne Zugkraftunterbrechung geschaltet werden, die benötigte Zeit für den Gangwechsel ist extrem kurz und für den Fahrer kaum spürbar.

Bei herkömmlichen Doppelkupplungsgetrieben werden hydraulische Stellglieder eingesetzt, um die hydraulischen Flüsse der beiden Teilgetriebe zu erzeugen. Mit einer Tandempumpe in der Form eines elektrischen Zweiwellenantriebs werden die hydraulischen Flüsse erzeugt, wobei für jede Welle eine separate hydraulische Pumpe eingesetzt wird. Derartige Pumpenaggregate sind daher vergleichsweise aufwändig und teuer, zudem benötigen sie einen beträchtlichen Einbauraum am Doppelkupplungsgetriebe.

Der Erfindung liegt daher die Aufgabe zugrunde, ein Pumpenaggregat für ein Doppelkupplungsgetriebe anzugeben, dass einfacher aufgebaut ist und dessen Einbauraum reduziert ist.

Zur Lösung dieser Aufgabe ist bei einem Pumpenaggregat der eingangs genannten Art erfindungsgemäß vorgesehen, dass es eine Pumpe umfasst, die derart ausgebildet ist, dass sie in einem ersten Betriebszustand einen Kühlstrom für die Kupplungen, in einem zweiten Betriebszustand einen Leistungsstrom für Stellorgane des Doppelkupplungsgetriebes und in einem dritten Betriebszustand sowohl den Kühlstrom als auch den Leistungsstrom erzeugt.

Der Erfindung liegt die Erkenntnis zugrunde, dass die Aufgaben der herkömmlichen Tandempumpe, die zwei separate hydraulische Pumpen aufweist, durch eine einzige Pumpe ersetzt werden können, die in der Lage ist, sowohl einen zur Kühlung dienenden Fluidstrom für die Kupplungen als auch einen für die Betätigung der Stellorgane eingesetzten Fluidstrom mit hohem Druck zur Verfügung zu stellen. Dadurch weist das erfindungsgemäße Pumpenaggregat lediglich eine einzige Pumpe auf, wodurch der Aufbau vereinfacht und ebenso der benötigte Einbauraum reduziert wird.

In dem ersten Betriebszustand stellt die Pumpe einen Kühlstrom für die Kupplungen zur Verfügung, beispielsweise wenn es durch eine hohe Schaltfrequenz zu einer Erwärmung der Kupplungen kommt. Der Kühlstrom zeichnet sich durch einen geringen Differenzdruck und eine hohe Fördermenge aus. In dem zweiten Betriebszustand stellt die Pumpe den Leistungsstrom für Stellorgane des Doppelkupplungsgetriebes zur Verfügung. Der Leistungsstrom zeichnet sich durch eine geringe Fördermenge und einen hohen Differenzdruck aus. In einem dritten Betriebszustand werden der Kühlstrom und der Leistungsstrom gleichzeitig zur Verfügung gestellt.

Vorzugsweise kann das erfindungsgemäße Pumpenaggregat eine Steuerungseinrichtung zur Steuerung der Pumpe aufweisen, die wahlweise in dem ersten, zweiten oder dritten Betriebszustand betreibbar ist. Die Steuerung der Pumpe erfolgt dabei mittels der elektronischen Steuerungseinrichtung, die den Kühlstrom, den Leistungsstrom oder beide steuert.

Es wird besonders bevorzugt, dass die Pumpe des erfindungsgemäßen Pumpenaggregats einen ersten mit den Kupplungen verbundenen Austritt und einen zweiten mit den Stellorganen verbundenen Austritt aufweist. Dadurch können die benötigten hydraulischen Flüsse erzeugt und an die entsprechenden Komponenten des Doppelkupplungsgetriebes geliefert werden. Besonders vorteilhaft ist dabei, dass der Kühlstrom und der Leistungsstrom gleichzeitig durch die lediglich eine Pumpe erzeugt werden können.

Bei dem erfindungsgemäßen Pumpenaggregat ist es von besonderem Vorteil, dass über den ersten Austritt der Kühlstrom mit geringem Differenzdruck und hohem Fördervolumen und über den zweiten Austritt der Leistungsstrom mit hohem Differenzdruck und niedrigem Fördervolumen bereitgestellt wird. Die genaue Höhe des Differenzdrucks und die Größe des Volumenstroms kann dabei mittels der Steuerungseinrichtung gesteuert werden.

Es wird besonders bevorzugt, dass die Pumpe des erfindungsgemäßen Pumpenaggregats als Schraubenspindelpumpe mit einer Antriebsspindel und ein oder zwei Laufspindeln ausgebildet ist. Die Antriebsspindel und die wenigstens eine Laufspindel der Schraubenspindelpumpe kämmen gegenläufig miteinander. Die Spindeln sind mit einem Spindelprofil ausgebildet, sodass bei der Rotation Förderräume in Form von abgeschlossenen Kammern für ein Fluid gebildet werden, wodurch das Fluid axial gefördert wird, wobei sich der Differenzdruck von Kammer zu Kammer erhöht.

Es liegt auch im Rahmen der Erfindung, dass die Pumpe des erfindungsgemäßen Pumpenaggregats, insbesondere die Schraubenspindelpumpe, einen elektrischen Antrieb aufweist. Bei einem derartigen als Elektromotor ausgebildeten Antrieb, kann die für den Antrieb erforderliche Energie von der Stromversorgung des Kraftfahrzeugs zur Verfügung gestellt werden. Die Pumpe kann durch die Steuerungseinrichtung bei Bedarf ein- und in Abhängigkeit von dem jeweiligen Betriebszustand wieder ausgeschaltet werden, was sich günstig auf den Energiebedarf für den Antrieb der Pumpe auswirkt.

In weiterer Ausgestaltung der Erfindung kann es vorgesehen sein, dass bei dem erfindungsgemäßen Pumpenaggregat der zweite Austritt der Pumpe, über den der Leitungsstrom bereitgestellt wird, mit einem Druckspeicher verbunden ist, der mit den Stellorganen des Doppelkupplungsgetriebes gekoppelt ist. Die Erzeugung des benötigten Drucks des Fluids erfolgt somit über die Pumpe, sodass das Fluid in der Lage ist, die für Stellbewegungen der Stellorgane erforderliche Energie zur liefern. Durch den erfindungsgemäß vorgesehenen Druckspeicher ist es nicht erforderlich, dass der Leistungsstrom permanent bereitgestellt wird, stattdessen kann der Druckspeicher bei Bedarf durch die Pumpe gefüllt werden, die anschließend durch die Steuerungseinrichtung ausgeschaltet werden kann.

Der Betrieb des erfindungsgemäßen Pumpenaggregats kann weiter verbessert werden, sofern das Doppelkupplungsgetriebe einen Temperatursensor zur Messung des von der Pumpe geförderten Fluids aufweist und die Steuerungseinrichtung die temperaturabhängige Viskosität des Fluids berücksichtigt. Auf diese Weise kann auch bei unterschiedlichen Viskositäten ein bestimmter festgelegter Förderstrom mit einem bestimmten Differenzdruck zur Verfügung gestellt werden.

Weitere Vorteile und Einzelheiten der Erfindung werden anhand eines Ausführungsbeispiels unter Bezugnahme auf die Zeichnungen erläutert. Die Zeichnungen sind schematische Darstellungen und zeigen:
- Fig. 1: ein hydraulisches Schaltbild eines erfindungsgemäßen Pumpenaggregats für ein Doppelkupplungsgetriebe;
- Fig. 2: eine geschnittene Ansicht der Schraubenspindelpumpe des Pumpenaggregats;
- Fig. 3: eine schematische Darstellung des Druckaufbaus einer Schraubenspindelpumpe;
- Fig. 4: den Druckaufbau des Pumpenaggregats bei der Erzeugung des Kühlstroms;
- Fig. 5: den Druckaufbau des Pumpenaggregats bei der Erzeugung des Leistungsstroms; und
- Fig. 6: den Druckaufbau wenn der Kühlstrom und der Leistungsstrom bereitgestellt werden.

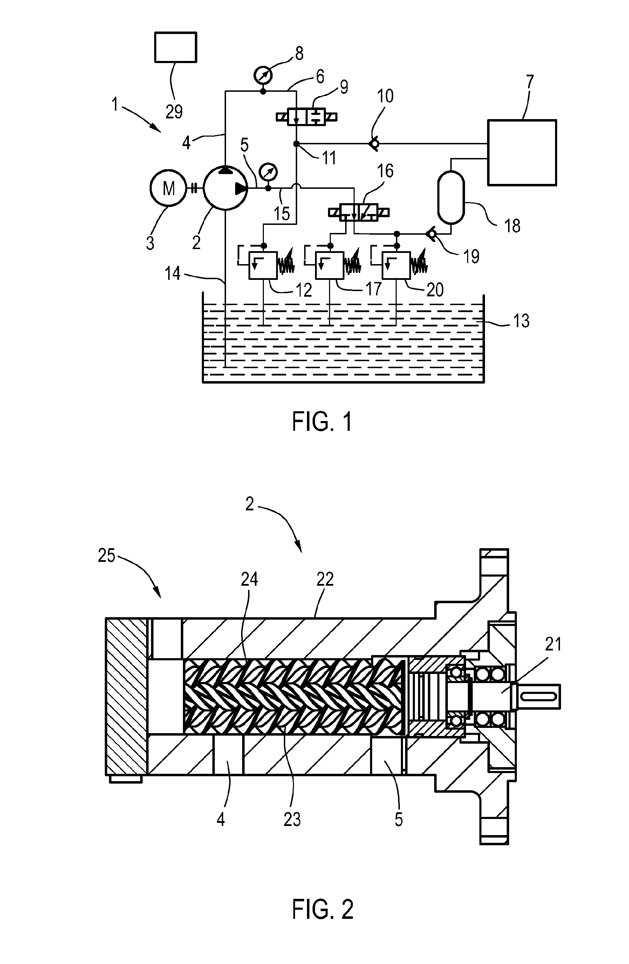

Fig. 1 zeigt ein hydraulisches Schaltbild eines Pumpenaggregats für ein Doppelkupplungsgetriebe eines Kraftfahrzeugs.

Das Pumpenaggregat 1 umfasst eine als Schraubenspindelpumpe 2 ausgebildete Pumpe, die durch einen EC-Motor 3 angetrieben wird. Die Schraubenspindelpumpe 2 weist einen ersten Austritt 4 und einen zweiten Austritt 5 auf. Der erste Austritt 4 ist über eine Leitung 6 mit einem Doppelkupplungsgetriebe 7 verbunden. In der Leitung 6 befindet sich ein Drucksensor 8 zur Erfassung des in der Leitung 6 herrschenden Drucks des Fluids. Weiterhin befindet sich in der Leitung 6 ein 2/2-Wegeventil 9, das zwei Schaltstellungen aufweist, sodass die Leitung 6 geöffnet oder geschlossen werden kann. Vor dem Doppelkupplungsgetriebe 7 befindet sich ein Rückschlagventil 10 in der Leitung, das verhindert, dass das Fluid von dem Doppelkupplungsgetriebe 7 zurückströmt.

Stromabwärts des 2/2-Wegeventils 9 befindet sich eine Verzweigung 11, von der das Fluid zu einem Druckbegrenzungsventil 12 gelangt, das mit einem Fluidvorrat 13 verbunden ist. An den Fluidvorrat 13 ist auch die Schraubenspindelpumpe 2 über eine Saugleitung 14 angeschlossen, sodass das Fluid in einem Kreislauf gefördert wird. Auf diese Weise gelangt überschüssiges Fluid, das nicht für den Kühlstrom benötigt wird, zum Fluidvorrat 13.

Über den zweiten Austritt 5 der Schraubenspindelpumpe 2 gelangt der Leistungsstrom mit hohem Differenzdruck über eine Leitung 15 zu einem 3/2-Wegeventil 16. Dieses Ventil besitzt zwei Schaltstellungen, sodass das Fluid entweder über ein Druckbegrenzungsventil 17 zu dem Fluidvorrat 13 gefördert wird oder zu einem Druckspeicher 18 gelangt. Vor dem Druckspeicher 18 befindet sich ein Rückschlagventil 19, das verhindert, dass das Fluid von dem Druckspeicher 18 zurückfließt. In diesem Bereich der Leitung befindet sich ein weiteres Druckbegrenzungsventil 20, über das das Fluid gegebenenfalls, wenn der Druckspeicher 18 gefüllt ist, zum Fluidvorrat 13 gelangt.

Das Pumpenaggregat 1 umfasst ferner eine schematisch dargestellte Steuerungseinrichtung 29, durch die die Pumpe als auch die daran angeschlossenen Ventile gesteuert werden. Die Steuerungseinrichtung 29 ist über in Fig. 1 nicht dargestellte Leitungen mit den entsprechenden Komponenten des Pumpenaggregats 1 verbunden.

Fig. 2 zeigt die Schraubenspindelpumpe 2 in einer geschnittenen Ansicht. Die Schraubenspindelpumpe 2 besteht im Wesentlichen aus einer Antriebsspindel 21, die in einem Gehäuse 22 drehbar gelagert ist. Die Antriebsspindel 21 kämmt mit zwei Laufspindeln 23, 24. Über einen Eintritt 25 an der Saugseite wird Fluid in das Innere des Gehäuses 22 gesaugt. Die miteinander kämmenden Spindelpakete der Antriebsspindel 21 und der Laufspindeln 23, 24 bilden Förderkammern, sodass das Fluid axial, in der in Fig. 2 gezeigten Ansicht nach rechts, gefördert wird, wobei sich der Druck des Fluids erhöht. Das Gehäuse 22 weist einen ersten Austritt 4 und einen zweiten, stromabwärts angeordneten Austritt 5 auf. Über den ersten Austritt 4 wird der Kühlstrom mit niedrigem Druck bereitgestellt, über den zweiten Austritt 5 der Leistungsstrom mit hohem Druck, mit dem die Stellkraft für Stellorgane des Doppelkupplungsgetriebes 7 erzeugt wird.

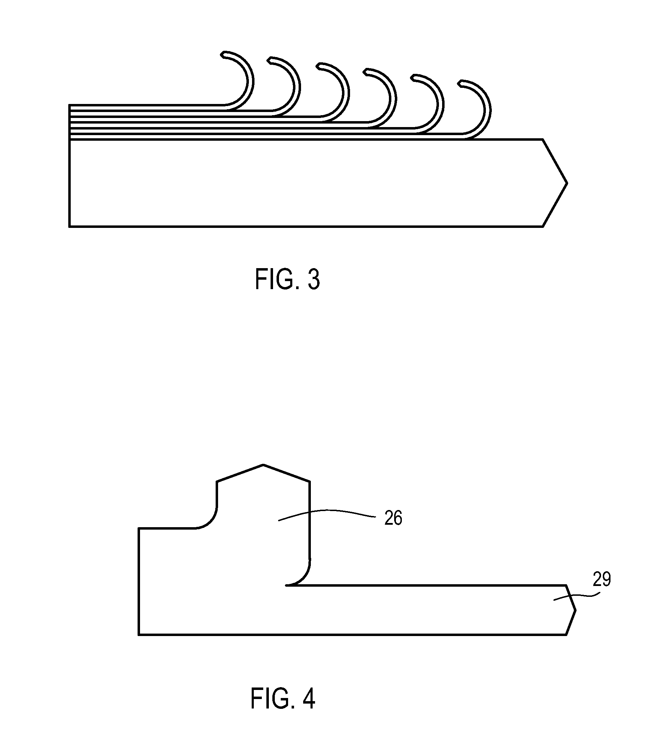

Fig. 3 zeigt eine schematische Darstellung des Druckaufbaus einer Schraubenspindelpumpe, wobei auch die durch Leckage verursachte Rückströmung dargestellt ist.

Fig. 4 zeigt den Druckaufbau des Pumpenaggregats bei der Erzeugung des Kühlstroms 26. In diesem ersten Betriebszustand wird lediglich der Kühlstrom 26 für die Kupplungen des Doppelkupplungsgetriebes benötigt. Der Kühlstrom 26 zeichnet sich durch ein hohes Fördervolumen und einen vergleichsweise geringen Druck bzw. eine geringe Druckdifferenz aus. Der in Fig. 4 gezeigte Betriebszustand liegt vor, wenn das Doppelkupplungsgetriebe 7 häufig Schaltvorgänge durchführt und der Kühlstrom 26 für die Kühlung der Kupplungen benötigt wird. Die für den Kühlstrom 26 nicht benötigte Überströmung 29 wird dabei über das geöffnete Druckbegrenzungsventil 17 abgeführt.

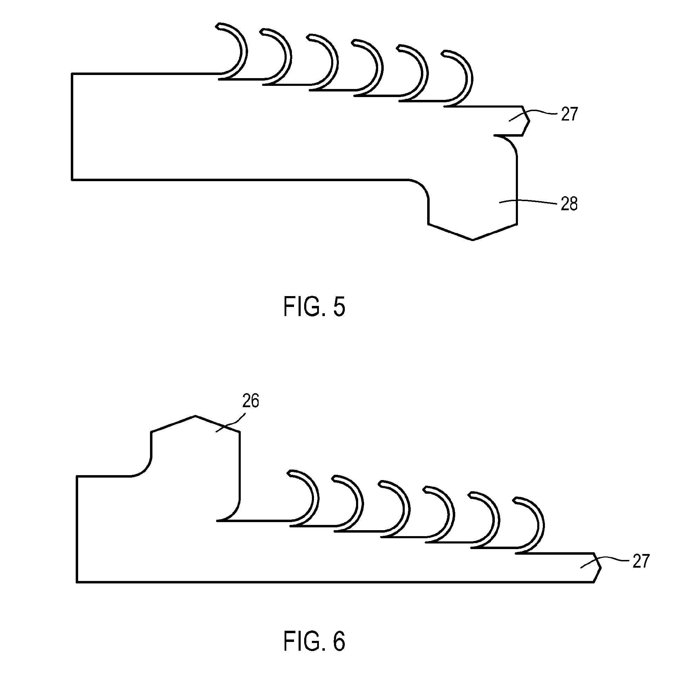

Fig. 5 zeigt den Druckaufbau bei der Erzeugung des Leistungsstroms 27. In diesem Zustand wird der Leistungsstrom 27, der für die Betätigung von Stellorganen des Doppelkupplungsgetriebes 7 benötigt wird, erzeugt. Der Leistungsstrom 27 zeichnet sich durch eine hohe Druckdifferenz und ein geringes Fördervolumen aus. Der Leistungsstrom 27 wird über den zweiten Austritt 5 der Schraubenspindelpumpe 2 abgegeben und dem Druckspeicher 18 zugeführt. Die entstehende Überströmmenge 28 wird über das Druckbegrenzungsventil 17 abgesteuert und gelangt in den Fluidvorrat 13.

Fig. 6 zeigt den Druckaufbau der Schraubenspindelpumpe, wenn der Kühlstrom 26 und der Leistungsstrom 27 gleichzeitig bereitgestellt werden. In diesem Zustand wird der Kühlstrom 26 über den ersten Austritt 4 und der Leistungsstrom 27 über den zweiten Austritt 5 bereitgestellt.

## Patentansprüche

1. Pumpenaggregat für ein Doppelkupplungsgetriebe eines Kraftfahrzeugs, mit zwei Teilgetrieben mit jeweils einer Kupplung, um ein Teilgetriebe mit einem Antrieb zu verbinden, **dadurch gekennzeichnet, dass** das Pumpenaggregat eine Pumpe umfasst, die derart ausgebildet ist, dass sie in einem ersten Betriebszustand einen Kühlstrom (26) für die Kupplungen, in einem zweiten Betriebszustand einen Leistungsstrom (27) für Stellorgane des Doppelkupplungsgetriebes (7) und in einem dritten Betriebszustand sowohl den Kühlstrom (26) als auch den Leistungsstrom (27) erzeugt.

2. Pumpenaggregat nach Anspruch 1, **dadurch gekennzeichnet, dass** es eine Steuerungseinrichtung (29) zur Steuerung der Pumpe aufweist, die wahlweise in dem ersten, zweiten oder dritten Betriebszustand betreibbar ist.

3. Pumpenaggregat nach Anspruch 1 oder 2, **dadurch gekennzeichnet, dass** die Pumpe einen ersten mit den Kupplungen verbundenen Austritt (4) und einen zweiten mit den Stellorganen verbundenen Austritt (5) aufweist.

4. Pumpenaggregat nach Anspruch 3, **dadurch gekennzeichnet, dass** über den ersten Austritt (4) der Kühlstrom (26) mit geringem Differenzdruck und hohem Fördervolumen und über den zweiten Austritt (5) der Leistungsstrom (27) mit hohem Differenzdruck und niedrigem Fördervolumen bereitgestellt wird.

5. Pumpenaggregat nach einem der vorangehenden Ansprüche, **dadurch gekennzeichnet, dass** die Pumpe als Schraubenspindelpumpe (2) mit einer Antriebsspindel (21) und ein oder zwei Laufspindeln (23, 24) ausgebildet ist.

6. Pumpenaggregat nach einem der vorangehenden Ansprüche, **dadurch gekennzeichnet, dass** die Pumpe, insbesondere die Schraubenspindelpumpe (2), einen elektrischen Antrieb aufweist.

7. Pumpenaggregat nach einem der vorangehenden Ansprüche, **dadurch gekennzeichnet, dass** die Pumpe, insbesondere die Schraubenspindelpumpe (2), mittels der Steuerungseinrichtung (29) ein-und ausschaltbar ist.

8. Pumpenaggregat nach einem der vorangehenden Ansprüche, **dadurch gekennzeichnet, dass** der zweite Austritt (5) der Pumpe, über den der Leistungsstrom bereitgestellt wird, mit einem Druckspeicher (18) verbunden ist, der mit den Stellorganen des Doppelkupplungsgetriebes (7) gekoppelt ist.

9. Pumpenaggregat nach einem der Ansprüche 2 bis 8, **dadurch gekennzeichnet, dass** das Doppelkupplungsgetriebe (7) einen Temperatursensor zur Messung des von der Pumpe geförderten Fluids aufweist und die Steuerungseinrichtung (29) die temperaturabhängige Viskosität des Fluids berücksichtigt.
